# EUROPEAN PATENT APPLICATION

(11) **EP 4 668 115 A1**
(43) Date of publication of application: **24.12.2025**
(21) Application number: 24818359.2
(22) Date of filing: 07.04.2024
(51) Int. Cl.: G06F 9/50

(54) **MEDIA CONTENT PROCESSING METHOD AND RELATED DEVICE**

(30) Priority: 05.06.2023 CN 202310660301
(71) Applicant: Tencent Technology (Shenzhen) Company Limited, Shenzhen, Guangdong 518057 (CN)
(72) Inventor: LI, Zhicheng, Shenzhen, Guangdong 518057 (CN)
(74) Representative: Gunzelmann, Rainer
(86) International application number: PCT/CN2024/086300
(87) International publication number: WO 2024/250822

(57) **Abstract**

The present application discloses a media content processing method and a related device. The method may comprise: according to content attribute information of media content to be processed, allocating a memory pool for executing a media application processing task, the media application processing task comprising at least one content processing sub-task arranged according to a preset execution order; for each content frame unit among at least one content frame unit, determining, from the memory pool, a memory block to be used for processing the content frame unit; executing, for the content frame unit by means of the memory block to be used, the content processing sub-task in the media application processing task; and when the execution of the content processing sub-task is completed, on the basis of the preset execution order, multiplexing the memory block to be used to execute a new content processing sub-task in the media application processing task, so as to obtain a final content frame unit after execution of all of the content processing sub-tasks in the media application processing task is completed. The present application can reduce frequent memory allocation application requests and releases among the content processing sub-tasks, which can improve media application processing performance.

## Description

### RELATED APPLICATION

This application claims priority to Chinese Patent Application No. 202310660301.6, entitled "MEDIA CONTENT PROCESSING METHOD AND RELATED DEVICE" filed with the China National Intellectual Property Administration on June 5, 2023, which is incorporated herein by reference in its entirety.

### FIELD OF THE TECHNOLOGY

This application relates to the technical field of computers, and in particular, to a media content processing technology.

### BACKGROUND OF THE DISCLOSURE

With the development of computer technologies and mobile communication technologies, various new media platforms have emerged, and more users publish various types of multimedia content (such as short videos) through these new media platforms. To ensure the content quality of the multimedia content, multiple types of application processing, such as image quality enhancement and intelligent editing, need to be performed on the multimedia content. The image quality enhancement may include processing such as frame interpolation, text enhancement, denoising, color enhancement, and compression and restoration. The intelligent editing may include intelligent subtitle addition, live real-time editing, watermark removal, video screenshots, and the like.

Basic operations of multimedia content processing may include content file inputting, demuxing, decoding, content encoding, container format encapsulating and packaging, content rendering, and various types of media application processing. In the current media content processing framework, the various types of media application processing for the media content are independent, and each media application processing procedure is a closed loop. Memory allocation and release operations are performed again during each media application processing, that is, each media application processing is independent in memory allocation and independently applies for allocating and recycling memory, which may cause frequent memory access allocation and release, resulting in poor media application processing performance.

### SUMMARY

Embodiments of this application provide a media content processing method and a related device. The related device may include a media content processing apparatus, an electronic device, a computer-readable storage medium, and a computer program product so that frequent memory allocation applications and releases among content processing sub-tasks may be reduced, thereby improving the media application processing performance.

The embodiments of this application provide a media content processing method, performed by an electronic device, and including the following operations:
allocating, according to content attribute information of the input media content, a memory pool for executing a media application processing task, the input media content comprising at least one content frame unit, the media application processing task including at least one content processing sub-task arranged in a preset execution order, and the memory pool including at least one memory block corresponding to the content attribute information;
determining, for each of the at least one content frame unit, a first memory block for processing the content frame unit from the memory pool;
executing the content processing sub-task in the media application processing task on the content frame unit through the first memory block, to obtain a processed content frame unit; and
reusing, when execution of the content processing sub-task is completed, the first memory block based on the preset execution order to execute a new content processing sub-task in the media application processing task on the processed content frame unit to obtain a final content frame unit on which all content processing sub-tasks in the media application processing task are executed.

Correspondingly, the embodiments of this application provide a media content processing apparatus, deployed on an electronic device, and including:
an allocation unit configured to allocate, according to content attribute information of the input media content, a memory pool for executing a media application processing task, the input media content comprising at least one content frame unit, the media application processing task including at least one content processing sub-task arranged in a preset execution order, and the memory pool including at least one memory block corresponding to the content attribute information;
a memory block determining unit configured to determine, for each of the at least one content frame unit, a first memory block for processing the content frame unit from the memory pool;
a first execution unit configured to execute the content processing sub-task in the media application processing task on the content frame unit through the first memory block, to obtain a processed content frame unit; and
a second execution unit configured to reuse, when execution of the content processing sub-task is completed, the first memory block based on the preset execution order to execute a new content processing sub-task in the media application processing task on the processed content frame unit to obtain a final content frame unit on which all content processing sub-tasks in the media application processing task are executed.

The embodiments of this application provide an electronic device, including a processor and a memory, the memory storing a plurality of instructions, and the processor loading the instructions to perform operations of the media content processing method provided in the embodiments of this application.

The embodiments of this application further provide a computer-readable storage medium, having a computer program stored therein. The computer program, when executed by a processor, implements operations of the media content processing method provided in the embodiments of this application.

In addition, the embodiments of this application further provide a computer program product, including a computer program which, when executed by a processor, implements operations of the media content processing method provided in the embodiments of this application.

The embodiments of this application provide a media content processing method and a related device. The input media content may be acquired, and the input media content includes at least one content frame unit. According to the content attribute information of the input media content, the memory pool is allocated to the media application processing task. The media application processing task includes at least one content processing sub-task arranged in the preset execution order, and the memory pool includes at least one memory block corresponding to the content attribute information. For each of the at least one content frame unit, the first memory block for processing the content frame unit is determined from the memory pool. The content processing sub-task in the media application processing task is executed on the content frame unit through the first memory block. When the execution of the content processing sub-task is completed, the first memory block is reused based on the preset execution order to execute a new content processing sub-task in the media application processing task on the processed content frame unit to obtain the final content frame unit on which all content processing sub-tasks in the media application processing task are executed. According to this application, the content processing sub-tasks may be executed through memory reusing. In this way, frequent memory allocation applications and releases among the content processing sub-tasks may be reduced, thereby improving the media application processing performance.

### BRIEF DESCRIPTION OF THE DRAWINGS

To describe the technical solutions in embodiments of this application more clearly, the drawings required in the descriptions of the embodiments will be briefly introduced below. Apparently, the drawings in the following description are only some embodiments of this application, and a person skilled in the art may obtain other drawings according to these drawings without involving any inventive effort.
FIG. 1a is a schematic diagram of a scene of a media content processing method according to an embodiment of this application.
FIG. 1b is a flowchart of a media content processing method according to an embodiment of this application.
FIG. 1c is a framework diagram of a media content processing method according to an embodiment of this application.
FIG. 1d is an illustration diagram of a media content processing method according to an embodiment of this application.
FIG. 1e is another illustration diagram of a media content processing method according to an embodiment of this application.
FIG. 1f is another framework diagram of a media content processing method according to an embodiment of this application.
FIG. 2 is another flowchart of a media content processing method according to an embodiment of this application.
FIG. 3 is a schematic structural diagram of a media content processing apparatus according to an embodiment of this application.
FIG. 4 is a schematic structural diagram of an electronic device according to an embodiment of this application.

### DESCRIPTION OF EMBODIMENTS

The technical solutions in embodiments of this application are clearly and completely described in the following with reference to the accompanying drawings in the embodiments of this application. Apparently, the described embodiments are merely some rather than all of the embodiments of this application. All other embodiments obtained by a person skilled in the art based on the embodiments of this application without inventive efforts shall fall within the protection scope of this application.

The embodiments of this application provide a media content processing method and a related device. The related device may include a media content processing apparatus, an electronic device, a computer-readable storage medium, and a computer program product. The media content processing apparatus may be specifically integrated into the electronic device, and the electronic device may be a terminal, a server, or another device.

The media content processing method of some embodiments may be performed on the terminal, may be performed on the server, or may be jointly performed by the terminal and the server. The above examples are not to be construed as limiting this application.

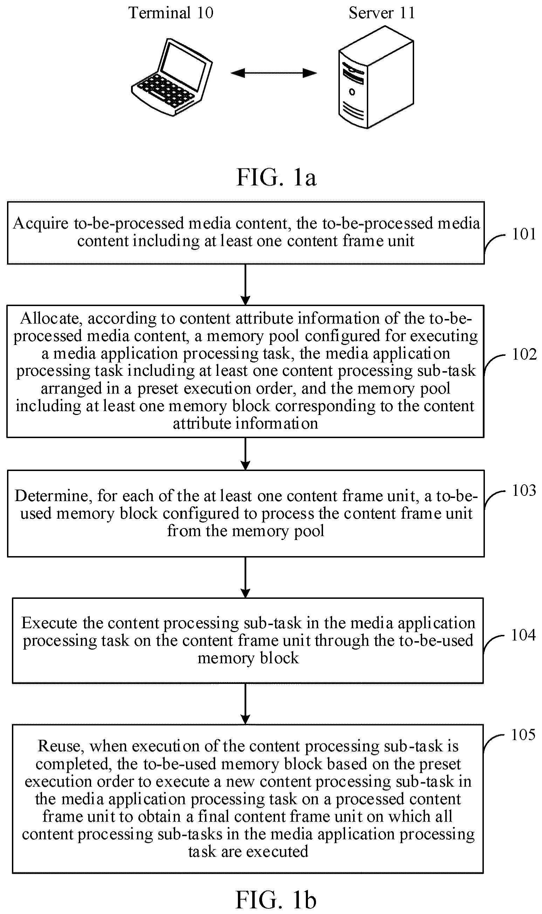

As shown in FIG. 1a, an example in which the media content processing method is jointly performed by the terminal and the server is used. A media content processing system provided in the embodiments of this application includes a terminal 10, a server 11, and the like. The terminal 10 and the server 11 are connected through a network, for example, through a wired or wireless network. A media content processing apparatus may be integrated into the server.

The server 11 may be configured to: allocate, according to content attribute information of the input media content, a memory pool for executing a media application processing task, the input media content comprising at least one content frame unit, the media application processing task including at least one content processing sub-task arranged in a preset execution order, and the memory pool including at least one memory block corresponding to the content attribute information; determine, for each of the at least one content frame unit, a memory block for processing the content frame unit from the memory pool; execute the content processing sub-task in the media application processing task on the content frame unit through the memory block, to obtain a processed content frame unit; reuse, when execution of the content processing sub-task is completed, the memory block based on the preset execution order to execute a new content processing sub-task in the media application processing task on the processed content frame unit to obtain a final content frame unit on which all content processing sub-tasks in the media application processing task are executed; and output, after media application processing tasks of all content frame units are completed, processed input media content, and release the memory block occupied in a processing process back to the memory pool, the processed input media content including final content frame units. The server 11 may be an independent physical server, a server cluster or a distributed system including a plurality of physical servers, or a cloud server providing a cloud computing service.

The terminal 10 may be configured to: receive the processed input media content outputted by the server 11, and render and display the processed input media content. The terminal 10 may include a mobile phone, an intelligent voice interaction device, an intelligent household appliance, an in-vehicle terminal, an aircraft, a tablet computer, a notebook computer, a personal computer (PC), or the like. The terminal 10 may further be provided with a client, and the client may be an application program client, a browser client, or the like.

The media content processing method provided in the embodiments of this application relates to the direction of cloud computing in the field of cloud technology.

The cloud technology refers to a hosting technology that unifies a series of resources such as hardware, software, and networks in a wide area network or a local area network to realize data calculation, storage, processing, and sharing. The cloud technology is a general term for network technology, information technology, integration technology, management platform technology, and application technology that are applied based on a commercial mode of cloud computing. It may form a resource pool and may be used on demand, which is flexible and convenient. The cloud computing technology will become an important support. The background service of a technical network system requires many computing and storage resources, for example, video websites, picture websites, and more portal websites. With the rapid development and application of the Internet industry, each item may have its own identification mark in the future, and the identification marks need to be transmitted to a backend system for logical processing. Data of different levels is processed separately, and all kinds of industry data require a strong system support, which can be realized only through the cloud computing.

Cloud computing refers to a delivery and usage mode of an information technology (IT) infrastructure, which involves obtaining required resources through a network in an on-demand and easily scalable manner. Broadly speaking, the cloud computing refers to a delivery and usage mode of a service, which involves obtaining required services through a network in an on-demand and easily scalable manner. Such services may be related to IT, software, and the Internet, or may be other services. The cloud computing is a product of development and integration of traditional computer and network technologies such as grid computing, distributed computing, parallel computing, utility computing, network storage technologies, virtualization, and load balance. With the development of the Internet, real-time data flows, and diversified connection devices, and the demands for search services, social networks, mobile commerce, and open collaboration, cloud computing has developed rapidly. Unlike the previous parallel distributed computing, the generation of cloud computing will conceptually promote revolutionary changes in the entire Internet mode and enterprise management mode.

Detailed descriptions are separately provided below. A description order of the following embodiments is not intended to limit the preferred order of the embodiments. It is noted that the technical features in the following embodiments in this application can implements in their respective embodiments, or implemented in combination with features in any other embodiments. That is, the embodiments in the application can be implemented alone, or in combination with any one or more of the other embodiments in the application, to achieve different technical solutions and technical effects.

Some embodiments will be described from the perspective of a media content processing apparatus. The media content processing apparatus may be specifically integrated into the electronic device, and the electronic device may be a server, a terminal, or another device.

As shown in FIG. 1b, a specific procedure of the media content processing method may be as follows. It is noted that the embodiments described with reference to the drawings in this application are merely exemplary, and it is not limited in this application that the respective method must include all the steps as described and illustrated; rather, the method in the application may include some or all of the steps as listed, and the steps may be combined with each other arbitrarily to form various embodiments of the application. In some embodiments, the method may include 101: Acquire input media content, the to-be-processed media content including at least one content frame unit.

The input media content may be media content that needs to be processed (i.e., to-be-processed media content) through the method provided in some embodiments of this application. The type of the to-be-processed media content is not limited in this embodiment of this application. For example, the to-be-processed media content may be video-type content and may include image content and audio content. In some embodiments, the to-be-processed media content may alternatively include only audio content or image content. This is not specifically limited in this embodiment. The to-be-processed media content may be media content on which a media application processing task needs to be performed, and may be specifically demuxed and decoded media content.

One content frame unit may include only one content frame, or may include a plurality of content frames. For example, one content frame unit may include all frames of a group of pictures (GOP) between two I frames (key frames). The GOP refers to a time interval between two I frames in video encoding.

If the to-be-processed media content is the image content, the content frame unit may be an image frame unit. If the to-be-processed media content is the audio content, the content frame unit may be an audio frame unit.

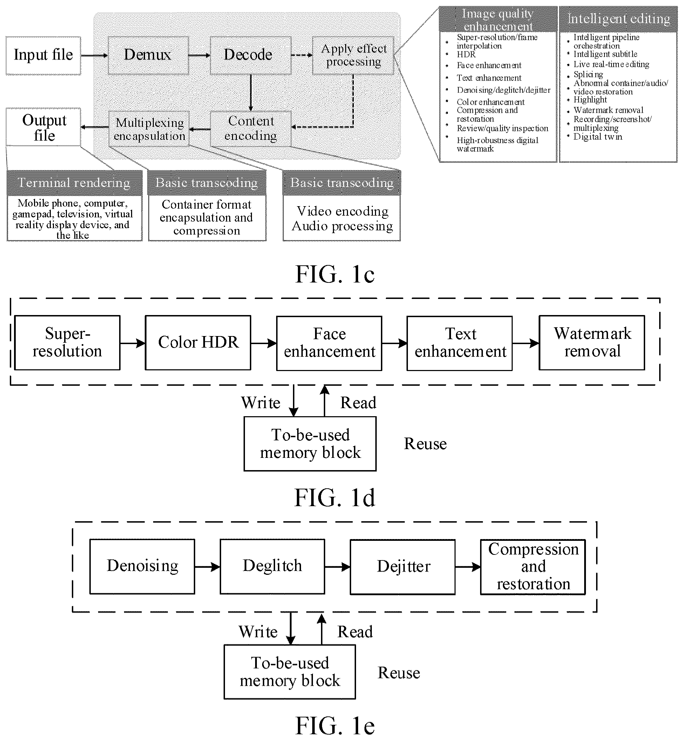

In a specific application scene, as shown in FIG. 1c, it is a basic architecture diagram of a media processing service (MPS) framework. A basic procedure of multimedia content processing may include content file input (input file), demuxing, decoding, various types of media application processing, content encoding, container format encapsulating and packaging, and content rendering. The content file herein may be an audio/video file.

An input of a demuxing module is an input file source container format (for example, mp4, mp3, ts, and FLV), and an output may be a raw video stream such as advanced audio coding (AAC), Opus, H.264, H.265, H.266, or AV1. An output audio of a decoder is pulse code modulation (PCM), and a video is a luminance and chrominance (YUV) raw stream. An input and output audio of an avfilter apply effects application (an application effect processing module, i.e., the foregoing media application processing) is PCM, and a video is YUV. An input audio of a content encoding module is PCM, a video is YUV, and an output is an encoded and compressed raw audio/video stream, such as AAC, Opus, H.264, H.265, H.266, or AV1. An input of a container format encapsulating and packaging module (i.e., a multiplexing encapsulation module) is a compressed raw audio/video stream, such as AAC, Opus, H.264, H.265, H.266, or AV1, and an output is a container-encapsulated format, such as mp4, mp3, ts, or FLV.

The container format encapsulating and packaging module outputs a standard container format such as mp4, mov, ts, and AAC. An audio/video packet obtained by container format encapsulating and packaging may be transmitted to a terminal. After receiving the audio/video packet, the terminal may demux the audio/video packet according to the standard container format, decode, render, and then play the audio/video packet. The terminal herein may include a mobile phone, a computer, a gamepad, a television, a virtual reality display device, and the like. This is not limited in this embodiment.

The PCM is a method for digitalizing an analog signal. The YUV (Y represents luminance or luma; and U and V represent chrominance or chroma) is a color encoding system and mainly used in video and graphic processing pipelines.

The demuxing module may separate input data in an encapsulation format into compressed and encoded audio stream data and compressed and encoded video stream data. There are many types of encapsulation formats, for example, MP4, MKV, RMVB, TS, FLV, and AVI. The function of the encapsulation format is to put the compressed and encoded video data and audio data together according to a particular format. For example, after a demuxing operation is performed on data in an FLV format, an H.264-encoded video bitstream and an AAC-encoded audio bitstream are outputted.

The decoder may decode video/audio compressing and encoding data into non-compressed original video/audio data. By decoding, the compressed and encoded video data is outputted into non-compressed color data, such as YUV420P and red green blue (RGB). The compressed and encoded audio data is outputted into non-compressed audio sampling data, such as PCM data.

An input and output audio format of the avfilter apply effects application processing procedure is PCM, and a video format is YUV. Audio and image quality enhancement and intelligent editing may be performed according to audio and video meta-information such as an audio sampling frequency and video resolution. For example, the image quality enhancement may include super-resolution, frame interpolation, color high dynamic range imaging (HDR), face enhancement, text enhancement, denoising, deglitch, dejitter, color enhancement, compression and restoration, review/quality inspection, and a high-robustness digital watermark. Intelligent editing may include intelligent pipeline orchestration, intelligent subtitles, live real-time editing, splicing, abnormal container/audio/video restoration, highlights, watermark removal, recording/screenshot/multiplexing, digital twins, and the like. This application mainly focuses on the avfilter apply effects application. The avfilter apply effects application may specifically include filter applications (one filter application corresponds to one content processing sub-task) such as super-resolution, frame interpolation, enhancement, color HDR, watermarking, splicing, highlights, recording screenshots, and multiplexing. Processing of these filter applications is independent, and the input and output are PCM for audio and YUV for video. In the current related art, each filter application is a closed loop and performs memory allocation and release operations again during processing. Existing filter processing frameworks such as FFmpeg, Gstreamer, and OpenCV are independent in memory allocation, and memory reusing is not performed. Each application processing independently re-applies for allocating and recycling memory, which may cause frequent memory allocation and recycling. Frequent memory access allocation and release may cause low filter application processing performance. Memory performance of such a framework architecture in an application scene (for example, an application scene such as 4K or 8K) with a high sampling rate and high resolution of the audio/video is becoming an application real-time processing bottleneck.

The filter is a filter that may provide many audio/video special effect processing functions, such as video zooming, intercepting, flipping, and superimposing.

Compared with an ordinary image, the HDR may provide more color ranges and image details, improve the image brightness contrast, greatly restore a real environment, and present extremely high image quality.

The audio sampling frequency (sampling rate) refers to how much a voice recording device samples the analog signal per unit time. A higher sampling frequency indicates a more realistic and natural waveform of a mechanical wave. On the current mainstream acquisition card, sampling frequencies are usually divided into five levels: 8,000 Hz, 11,025 Hz, 22,050 Hz, 24,000 Hz, 44,100 Hz, and 48,000 Hz. 11,025 Hz can reach the sound quality of amplitude modulation (AM) broadcast, 22,050 Hz and 24,000 Hz can reach the sound quality of frequency modulation (FM) broadcast, 44,100 Hz is a theoretical compact disc (CD) sound quality limit, and 48,000 Hz is more accurate.

The resolution is defined as the number of pixels that are organized or arranged according to a width and a height on a screen or an image. Specifically, the resolution can measure the number of pixels of an image, and more pixels indicate higher quality. A most commonly used video resolution is referred to as a "format", and is technically referred to as ultra high definition or full high definition. For example, common video resolutions include: 480P (640×480), 720P (1,280×720), 1,080P (1,920×1,080), 4K (3,840×2,160), and 8K (7,680×4,320).

This application may provide a memory pool allocation solution. The memory pool is reused during processing of all filter applications after the decoder, thereby reducing the engineering performance consumption brought by frequent memory allocation applications and releases among the filter applications. This can improve the engineering performance by 20% + in video filter processing application scenes such as 4K and 8K with a high resolution and high frame per second (FPS). The solution provided in this application is well applied to video cloud media processing business products as well as 8K projects of customers.

The FPS is a "frame refresh rate (in Hz)". The FPS is a definition in the field of images, refers to the number of transmitted frames per second of an image, and is commonly referred to as the number of images of an animation or a video. The FPS measures the amount of information for saving and displaying a dynamic video. A larger FPS indicates a smoother displayed action.

In some embodiments, the method may further include 102: Allocate, according to content attribute information of the to-be-processed media content, a memory pool for executing a media application processing task, the media application processing task including at least one content processing sub-task arranged in a preset execution order, and the memory pool including at least one memory block corresponding to the content attribute information.

The media application processing task is a task of performing MPS on content frame units of the to-be-processed media content. The MPS may refer to performing container format demuxing, decoding, enhancement and application processing (such as watermark superimposition, video screenshots, intelligent covering, intelligent editing, and image quality enhancement), audio/video encoding format transcoding, encapsulating, and distributing, and the like on an audio/video file.

The allocation of the memory pool to the media application processing task may be applied according to the content attribute information of the to-be-processed media content. The content attribute information herein may be an audio sampling frequency, video resolution, or the like.

The memory pool is a memory allocation manner and is alternatively referred to as fixed-size-blocks allocation. In the current related art, the memory allocation is usually applied directly using application programming interfaces (APIs) such as new and malloc, which brings disadvantages as follows. Since a size of the applied memory block is variable, many memory fragments are caused when the applied memory block is frequently used. Many fragments may cause memory release, cleaning, and merging when the memory is insufficient, leading to large memory defragmentation consumption, thereby reducing the performance.

Since the application and release of the memory are both inefficient, this application may apply for a relatively large block of memory (i.e., a memory pool, specifically, when this block of memory is not sufficient for use, secondary memory allocation may be performed again) at the beginning. Then, a corresponding memory resource may be extracted from this block of memory each time the corresponding memory resource is required in a task execution process. In addition, only after the media application processing task is executed completely, the memory block occupied in a processing process is actually released to an operating system. In this way, the number of memory application and release operations may be reduced, thereby improving the efficiency.

The memory pool may include at least one memory block corresponding to the content attribute information. Specifically, a size of each memory block may correspond to the content attribute information (such as an audio sampling rate and video resolution) of the to-be-processed media content. Memory blocks in the memory pool have the same size. In this way, the memory size allocated each time is fixed, thereby avoiding the generation of memory fragments.

In some embodiments, the media application processing task includes a plurality of sections, each section may be considered as a content processing sub-task, and different content processing sub-tasks may perform different types of content processing on the content frame unit. For example, the content processing sub-task may be super-resolution, frame interpolation, or color enhancement.

In a possible implementation, in some embodiments, the operation of "allocating, according to content attribute information of the to-be-processed media content, a memory pool for executing a media application processing task" may include:
acquiring a preset mapping relationship set, the preset mapping relationship set including a mapping relationship between a preset content attribute and a preset memory pool;
querying the preset mapping relationship set for a preset memory pool corresponding to the content attribute information of the to-be-processed media content; and
allocating, based on the preset memory pool from the querying, the memory pool for executing the media application processing task.

The preset mapping relationship set may be a relationship table of the preset content attribute and the preset memory pool. A corresponding preset memory pool may be queried from the relationship table based on the content attribute information.

The preset memory pool from the querying may be determined as the memory pool for executing the media application processing task.

In some embodiments, memory resources of the memory pool may be divided in advance into at least one memory block corresponding to the content attribute information (for example, a frame resolution size), thereby improving the memory allocation efficiency. For example, memory resources of a memory pool corresponding to video resolution of 8K may be divided based on the video resolution of 8K, to obtain at least one memory block corresponding to the video resolution of 8K.

In a possible implementation, in some embodiments, the media content processing method may further include:
determining, in response to that the preset memory pool corresponding to the content attribute information is not found in the preset mapping relationship set by the querying, an applied memory size based on the content attribute information of the to-be-processed media content and a preset duration of content for processing; and
allocating, based on the applied memory size, the memory pool for executing the media application processing task on the audio content.

The preset duration of content for processing may be set according to an actual situation, and may be automatically set according to a video GOP size and machine memory configuration. For example, if the GOP size is 2 seconds and the machine memory size is sufficient, the preset duration of content for processing may be set to 2 seconds. The video GOP size is a time interval between two I frames in video encoding.

If the to-be-processed media content is the image content, the content attribute information may be an image size, image color sampling information, an image pixel bit depth, and a frame refresh rate of the image frame unit.

The image pixel bit depth refers to that when a color of a digital image is recorded, a computer is actually represented by the bit depth required by each pixel. To enable the computer to display a color, data of the indicated color is recorded using a counting unit referred to as a "bit". When the data is recorded in the computer in a particular arrangement manner, the data forms a computer file of a digital image. The "bit" is for recording a color value of each pixel. The richer the color of the image, the more "bits". Specifically, N bits indicate that a color contains 2^{N} different shades of this color. The number of bits used for each pixel in a computer is referred to as the "bit depth".

The image color sampling information may refer to a YUV image sampling manner. There may be mainly three sampling manners: YUV 4: 4: 4 sampling, YUV 4: 2: 2 sampling, and YUV 4: 2: 0 sampling. Specifically, Y represents the luminance or luma, and U and V represent the chrominance or chroma. The chrominance defines two aspects of a color: hue and saturation. For the YUV image, not every pixel needs to contain three components: Y, U, and V. According to different sampling manners, each Y component may correspond to its own UV component, or several Y components may share the UV component. Regardless of the sampling manner, the luminance is fully sampled, and the difference lies in sampling rates of the U and V components.

In the YUV 4: 4: 4 sampling manner, each Y corresponds to a group of UV components, and sampling ratios of the Y, U, and V components are the same. Therefore, in a generated image, information of the three components of each pixel is complete and is 8 bits, i.e., one byte.

In the YUV 4: 2: 2 sampling manner, every two Ys share a group of UV components, sampling of the UV components is half of sampling of the Y component, and the Y component and the UV components are sampled according to a ratio of 2: 1. If there are 10 pixels in a horizontal direction, 10 Y components are sampled, and only 5 UV components are sampled. Specifically, each time a pixel is sampled, a Y component is sampled, and U and V components are sampled at intervals.

In the YUV 4: 2: 0 sampling manner, every four Ys share a group of UV components, and the UV components are only a quarter of the Y components. This does not refer to that only the U component is sampled but no V component is sampled. Instead, when each row is scanned, only one chrominance component (U or V) is scanned, and the chrominance component and the Y component are sampled in a 2: 1 manner. For example, when a first row is scanned, YU is sampled in a 2: 1 manner. Then, when a second row is scanned, YV components are sampled in a 2: 1 manner. For each chrominance component, sampling of the chrominance component to that of the Y component is 2: 1 in both the horizontal direction and the vertical direction.

If the to-be-processed media content is the audio content, the content attribute information may be an audio sampling frequency and an audio sampling bit depth corresponding to the audio frame unit. The audio sampling bit depth refers to how many bits are adopted to represent an amplitude at a time point. More bits indicate a more accurate amplitude change that may be represented.

In a possible implementation, in some embodiments, the to-be-processed media content includes image content, and the content frame unit is an image frame unit of the image content.

The operation of "allocating, according to content attribute information of the to-be-processed media content, a memory pool for executing a media application processing task" may include:
calculating a memory capacity occupied by the image frame unit according to an image size, image color sampling information, and an image pixel bit depth of the image frame unit;
determining an applied memory size according to the memory capacity and a frame refresh rate corresponding to the image frame unit; and
allocating, based on the applied memory size, the memory pool for executing the media application processing task on the image content.

The image size, the image color sampling information, and the image pixel bit depth of the image frame unit may be fused to obtain the memory capacity occupied by the image frame unit. The fusion manner may be multiplication. After the memory capacity occupied by the image frame unit is obtained, the memory capacity may be multiplied by the frame refresh rate of the image frame unit and the preset duration of content for processing to obtain the applied memory size. The applied memory size is a size of a to-be-applied memory pool.

For example, the image size of the image frame unit is 7,680 * 4,320, and the image pixel bit depth is 10 bits. In a case that the image pixel bit depth is 10 bits, two 2 bytes may be allocated to each pixel. In addition, the image color sampling information may be the YUV 4: 2: 2 sampling manner. In the YUV 4: 2: 2 sampling manner, sampling of the UV components is half of sampling of the Y component. When the number of bytes occupied by Y is 1, the number of bytes occupied by UV is 0.5. Therefore, the image color sampling information may be 1.5 bytes, and the memory capacity occupied by the image frame unit may be 7,680 * 4,320 * 1.5 * 2 * 8 bits = 796, 262, 400 bits. If the preset duration of content for processing is 2 seconds and the frame refresh rate is 50 FPS, the applied memory size may be: 796,262,400 bits * 2 * 50 = 79,626,240,000 bits.

In a possible implementation, in some embodiments, the to-be-processed media content includes audio content, and the content frame unit is an audio frame unit of the audio content.

The operation of "allocating, according to content attribute information of the to-be-processed media content, a memory pool for executing a media application processing task" may include:
calculating a memory capacity occupied by the audio frame unit according to an audio sampling frequency and an audio sampling bit depth corresponding to the audio frame unit;
determining an applied memory size according to the memory capacity and a preset duration of content for processing; and
allocating, based on the applied memory size, the memory pool for executing the media application processing task on the audio content.

The audio sampling frequency and the audio sampling bit depth corresponding to the audio frame unit may be fused to calculate the memory capacity occupied by the audio frame unit. The fusion manner may be multiplication. After the memory capacity occupied by the audio frame unit is obtained, the memory capacity may be multiplied by the preset processing content duration to reach the applied memory size. The applied memory size is a size of a to-be-applied memory pool. The preset duration of content for processing may be set according to an actual situation. This is not specifically limited in this embodiment.

For example, if the audio sampling frequency corresponding to the audio frame unit is 8K and the audio sampling bit depth is 8 bits, the memory capacity occupied by the audio frame unit may be 8,000 * 8 bits = 64,000 bits. If the preset duration of content for processing is 2 seconds, the applied memory size may be 64,000 bits * 2 = 128,000 bits.

In some embodiments, the method may further include 103: Determine, for each of the at least one content frame unit, a to-be-used memory block for processing the content frame unit from the memory pool.

The memory block in the memory pool may be marked with usage state information. The usage state information includes an idle state and an occupied state. In some embodiments of this application, the to-be-used memory block may be selected from the memory blocks in the idle state. In a possible implementation, a memory block corresponding to content attribute information (such as the audio sampling frequency or the video resolution) of a to-be-processed content frame unit may further be selected.

In a possible implementation, in some embodiments, before the operation of "determining a to-be-used memory block for processing the content frame unit from the memory pool", the method may further include:
setting a preset idle memory queue; and
storing memory addresses of the memory blocks in the idle state in the memory pool into the preset idle memory queue.

The operation of "determining a to-be-used memory block for processing the content frame unit from the memory pool" may include:
extracting the to-be-used memory address from the preset idle memory queue; and
determining a memory block corresponding to the to-be-used memory address as the to-be-used memory block for processing the content frame unit.

In some embodiments, the method may further include 104: Execute the content processing sub-task in the media application processing task on the content frame unit through the to-be-used memory block.

In some embodiments, the method may further include 105: Reuse, when execution of the content processing sub-task is completed, the to-be-used memory block based on the preset execution order to execute a new content processing sub-task in the media application processing task on a processed content frame unit to obtain a final content frame unit on which all content processing sub-tasks in the media application processing task are executed.

In a possible implementation, in some embodiments, the operation of "executing the content processing sub-task in the media application processing task on the content frame unit through the to-be-used memory block" may include:
determining a current content processing sub-task from the media application processing task based on the preset execution order; and
executing the current content processing sub-task on the content frame unit through the to-be-used memory block to obtain the processed content frame unit.

The operation of "reusing, when execution of the content processing sub-task is completed, the to-be-used memory block based on the preset execution order to execute a new content processing sub-task in the media application processing task on a processed content frame unit to obtain a final content frame unit on which all content processing sub-tasks in the media application processing task are executed" may include:
determining, when execution of the current content processing sub-task is completed, a new current content processing sub-task from the media application processing task based on the preset execution order, and determining the processed content frame unit as a new content frame unit; and
returning to the operation of executing task processing logic of the current content processing sub-task on the content frame unit by reusing the to-be-used memory block, to obtain the final content frame unit on which all content processing sub-tasks in the media application processing task are executed.

The content processing sub-tasks are executed serially and have a particular execution order. Through memory reusing, all content processing sub-tasks may be executed serially one by one to complete the media application processing task.

The new current content processing sub-task may be a next content processing sub-task of the original current content processing sub-task, and an output of the previous content processing sub-task is an input of the next content processing sub-task.

The final content frame unit is obtained by executing all content processing sub-tasks on the content frame unit.

In a possible implementation, in some embodiments, after the operation of "reusing the to-be-used memory block based on the preset execution order to execute a new content processing sub-task in the media application processing task on a processed content frame unit to obtain a final content frame unit on which all content processing sub-tasks in the media application processing task are executed", the media content processing method may further include:
determining an unprocessed content frame unit, the unprocessed content frame unit being a content frame unit on which the media application processing task is not executed; and
executing the content processing sub-tasks on the unprocessed content frame unit by reusing the to-be-used memory block to obtain the final content frame unit corresponding to the unprocessed content frame unit.

In some embodiments, second-level memory reusing may further be provided. First-level memory reusing refers to performing, for the same content frame unit, memory reusing in the processing process of the content processing sub-tasks of the content frame unit. The second-level memory reusing refers to that after a content frame unit completes executing the media application processing task, a memory block occupied by the content frame unit in the processing process may be reused by another frame.

In a possible implementation, in some embodiments, the operation of "executing the content processing sub-tasks on the unprocessed content frame unit by reusing the to-be-used memory block to obtain the final content frame unit corresponding to the unprocessed content frame unit" may include:
adding a to-be-used memory address corresponding to the to-be-used memory block to a preset idle memory queue, the preset idle memory queue being used for storing memory addresses of memory blocks in an idle state;
extracting the to-be-used memory address from the preset idle memory queue; and
executing the content processing sub-tasks on the unprocessed content frame unit through the to-be-used memory block corresponding to the to-be-used memory address to obtain the final content frame unit corresponding to the unprocessed content frame unit.

After the media application processing task of a content frame unit is executed by the to-be-used memory block, the to-be-used memory block may be marked as an idle state and added to the preset idle memory queue. The preset idle memory queue may be a first in first out (FIFO) queue.

In some embodiments, the memory block in the memory pool may be marked with usage state information. The usage state information includes an idle state and an occupied state.

After the operation of "executing the content processing sub-tasks on the content frame unit based on the preset execution order by reusing the to-be-used memory block, to obtain the final content frame unit", the method may further include:
updating, when it is detected that the content frame unit completely uses the to-be-used memory block, the usage state information of the to-be-used memory block from the occupied state to the idle state; and
adding the to-be-used memory address of the to-be-used memory block to the preset idle memory queue;
extracting the to-be-used memory address from the preset idle memory queue; and
executing task processing logic of the content processing sub-tasks on an unprocessed content frame unit based on a preset order through a memory block corresponding to a selected to-be-used memory address, to obtain the final content frame unit, the unprocessed content frame unit being a content frame unit on which the media application processing task is not executed.

In a specific scene, when the to-be-processed media content is video image content, memory pools corresponding to a plurality of video resolutions may be preset, for example, a memory pool corresponding to the video resolution of 8k and a memory pool corresponding to the video resolution of 4k. Each memory pool includes a plurality of memory blocks at the corresponding video resolution. If video image content needs to be processed, a memory pool to be selected and allocated may be determined according to video resolution of the video image content. If there is no memory pool corresponding to the video resolution, memory may be applied according to the image size, color sampling information, image pixel bit depth, and frame refresh rate, and the applied memory size is marked M. A memory pool obtained through application includes a plurality of memory blocks at the corresponding video resolution, and a total size of all memory blocks is M.

In a process of performing filter application processing on the image frame units, if there is no time sequence association among the image frame units, a plurality of frames may be processed in parallel through a plurality of memory blocks from the applied memory pool. The time sequence association herein refers to that for a frame that needs to refer to another frame for pixel parsing, the frame has time sequence association with the referenced frame.

An application filter processing procedure of each image frame unit includes super-resolution, color HDR, face, font, and the like. A processing procedure of each frame is as follows. Filter application processing (for example, super-resolution) is performed on the frame by allocating a memory block for processing the frame. After the processing is completed, the memory block is reused to perform the next filter application processing (for example, color HDR) until all filter application processing is completed. The memory block may be marked as idle and reused by another frame.

For example, the media application processing task of a video image may include five content processing sub-tasks: super-resolution, color HDR, face enhancement, text enhancement, and watermark removal. Each content processing sub-task corresponds to a filter application. An output of a filter application corresponding to super-resolution is an input of a filter application corresponding to color HDR. An output of the filter application corresponding to color HDR is an input of a filter application corresponding to face enhancement. An output of the filter application corresponding to face enhancement is an input of a filter application corresponding to text enhancement. An output of the filter application corresponding to text enhancement is an input of a filter application corresponding to watermark removal. For each to-be-processed image frame unit, a to-be-used memory block for processing the image frame unit may be allocated according to content attribute information of the image frame unit. Then, task processing logic of super-resolution is performed on the image frame unit through the to-be-used memory block. After execution of the content processing sub-task of super-resolution is completed, the to-be-used memory block is not released, and by reusing the to-be-used memory block, task processing logic of color HDR is performed on the image frame unit on which super-resolution is performed. After execution of the content processing sub-task of color HDR is completed, the to-be-used memory block is not released, and by reusing the to-be-used memory block, task processing logic of face enhancement is performed on the image frame unit on which color HDR is performed. After execution of the content processing sub-task of face enhancement is completed, the to-be-used memory block is not released, and by reusing the to-be-used memory block, task processing logic of text enhancement is performed on the image frame unit on which face enhancement is performed. After execution of the content processing sub-task of text enhancement is completed, the to-be-used memory block is not released, and by reusing the to-be-used memory block, task processing logic of watermark removal is performed on the image frame unit on which text enhancement is performed, so as to obtain the image frame unit on which watermark removal is performed. The image frame unit on which watermark removal is performed is a final image frame unit on which all content processing sub-tasks are executed. Finally, if there are other image frame units on which the media application processing task is not performed, the to-be-used memory block may be provided to these unprocessed image frame units for reusing, so as to execute the media application processing task on the unprocessed image frame units through the to-be-used memory block.

Referring to FIG. 1d, a specific process of executing five content processing sub-tasks, i.e., super-resolution, color HDR, face enhancement, text enhancement, and watermark removal, on an image frame unit by reusing the to-be-used memory blocks is described as follows.
1. The image frame unit is written into the to-be-used memory block. A module corresponding to the content processing sub-task "super-resolution" reads the image frame unit from the to-be-used memory block, and the image frame unit is used as an input of the module corresponding to "super-resolution" and processed through task processing logic of the module corresponding to "super-resolution". After execution of the content processing sub-task corresponding to "super-resolution" is completed, an image frame unit on which super-resolution is performed is obtained and outputted.
2. The outputted image frame unit on which super-resolution is performed is written into the to-be-used memory block. A module corresponding to the content processing sub-task "color HDR" reads the image frame unit on which super-resolution is performed from the to-be-used memory block, and the image frame unit on which super-resolution is performed is used as an input of the module corresponding to "color HDR" and processed through task processing logic of the module corresponding to "color HDR". After execution of the content processing sub-task corresponding to "color HDR" is completed, an image frame unit on which color HDR is performed is obtained and outputted.
3. The outputted image frame unit on which color HDR is performed is written into the to-be-used memory block. A module corresponding to the content processing sub-task "face enhancement" reads the image frame unit on which color HDR is performed from the to-be-used memory block, and the image frame unit on which color HDR is performed is used as an input of the module corresponding to "face enhancement" and processed through task processing logic of the module corresponding to "face enhancement". After execution of the content processing sub-task corresponding to "face enhancement" is completed, an image frame unit on which face enhancement is performed is obtained and outputted.
4. The outputted image frame unit on which face enhancement is performed is written into the to-be-used memory block. A module corresponding to the content processing sub-task "text enhancement" reads the image frame unit on which face enhancement is performed from the to-be-used memory block, and the image frame unit on which face enhancement is performed is used as an input of the module corresponding to "text enhancement" and processed through task processing logic of the module corresponding to "text enhancement". After execution of the content processing sub-task corresponding to "text enhancement" is completed, an image frame unit on which text enhancement is performed is obtained and outputted.
5. The outputted image frame unit on which text enhancement is performed is written into the to-be-used memory block. A module corresponding to the content processing sub-task "watermark removal" reads the image frame unit on which text enhancement is performed from the to-be-used memory block, and the image frame unit on which text enhancement is performed is used as an input of the module corresponding to "watermark removal" and processed through task processing logic of the module corresponding to "watermark removal". After execution of the content processing sub-task corresponding to "watermark removal" is completed, an image frame unit on which watermark removal is performed is obtained and outputted. The image frame unit on which watermark removal is performed is the final image frame unit on which all content processing sub-tasks are executed.

For audio, a processing process is similar to that of a video image.

In another specific scene, when the to-be-processed media content is audio content, memory pools corresponding to a plurality of audio sampling frequencies may be preset, for example, a memory pool corresponding to an audio sampling frequency of 8k and a memory pool corresponding to an audio sampling frequency of 16k. Each memory pool includes a plurality of memory blocks at a corresponding audio sampling frequency. If audio content needs to be processed, a memory pool to be selected and allocated may be determined according to an audio sampling frequency of the audio content. If there is no memory pool corresponding to the audio sampling frequency, memory may be applied according to the audio sampling frequency and the audio sampling bit depth, and the applied memory size is marked as N. A memory pool obtained through application includes a plurality of memory blocks at a corresponding audio sampling frequency, and a total size of all memory blocks is N.

In a process of performing filter application processing on the audio frame units, if there is no time sequence association among the audio frame units, a plurality of frames may be processed in parallel through a plurality of memory blocks from the applied memory pool. The time sequence association herein refers to that for a frame that needs to refer to another frame for parsing, the frame has time sequence association with the referenced frame.

An application filter processing procedure of each audio frame unit includes denoising, deglitch, dejitter, compression and restoration, and the like. A processing procedure of each frame is as follows. Filter application processing is performed on the frame by allocating a memory block for processing the frame. After the processing is completed, the memory block is reused to perform the next filter application processing until all filter application processing is completed. The memory block may be marked as idle and reused by another audio frame unit.

For example, the media application processing task of audio may include four content processing sub-tasks: denoising, deglitch, dejitter, and compression and restoration. Each content processing sub-task corresponds to a filter application. An output of a filter application corresponding to denoising is an input of a filter application corresponding to deglitch. An output of the filter application corresponding to deglitch is an input of a filter application corresponding to dejitter. An output of the filter application corresponding to dejitter is an input of a filter application corresponding to compression and restoration. For each to-be-processed audio frame unit, a to-be-used memory block for processing the audio frame unit may be allocated according to content attribute information of the audio frame unit. Then, task processing logic of denoising is performed on the audio frame unit through the to-be-used memory block. After execution of the content processing sub-task of denoising is completed, the to-be-used memory block is not released, and by reusing the to-be-used memory block, task processing logic of deglitch is performed on the audio frame unit on which denoising is performed. After execution of the content processing sub-task of deglitch is completed, the to-be-used memory block is not released, and by reusing the to-be-used memory block, task processing logic of dejitter is performed on the audio frame unit on which deglitch is performed. After execution of the content processing sub-task of dejitter is completed, the to-be-used memory block is not released, and by reusing the to-be-used memory block, task processing logic of compression and restoration is performed on the audio frame unit on which dejitter is performed, so as to obtain the audio frame unit on which compression and restoration are performed. The audio frame unit on which compression and restoration are performed is a final audio frame unit on which all content processing sub-tasks are executed. Finally, if there are other audio frame units on which the media application processing task is not performed, the to-be-used memory block may be provided to these unprocessed audio frame units for reusing, so as to execute the media application processing task on the unprocessed audio frame units through the to-be-used memory block.

Referring to FIG. 1e, a specific process of executing four content processing sub-tasks, i.e., denoising, deglitch, dejitter, and compression and restoration, on an audio frame unit by reusing the to-be-used memory block is described as follows.
1. The audio frame unit is written into the to-be-used memory block. A module corresponding to the content processing sub-task "denoising" reads the audio frame unit from the to-be-used memory block, and the audio frame unit is used as an input of the module corresponding to "denoising" and processed through task processing logic of the module corresponding to "denoising". After execution of the content processing sub-task corresponding to "denoising" is completed, an audio frame unit on which denoising is performed is obtained and outputted.
2. The outputted audio frame unit on which denoising is performed is written into the to-be-used memory block. A module corresponding to the content processing sub-task "deglitch" reads the audio frame unit on which denoising is performed from the to-be-used memory block, and the audio frame unit on which denoising is performed is used as an input of the module corresponding to "deglitch" and processed through task processing logic of the module corresponding to "deglitch". After execution of the content processing sub-task corresponding to "deglitch" is completed, an audio frame unit on which deglitch is performed is obtained and outputted.
3. The outputted audio frame unit on which deglitch is performed is written into the to-be-used memory block. A module corresponding to the content processing sub-task "dejitter" reads the audio frame unit on which deglitch is performed from the to-be-used memory block, and the audio frame unit on which deglitch is performed is used as an input of the module corresponding to "dejitter" and processed through task processing logic of the module corresponding to "dejitter". After execution of the content processing sub-task corresponding to "dejitter" is completed, an audio frame unit on which dejitter is performed is obtained and outputted.
4. The outputted audio frame unit on which dejitter is performed is written into the to-be-used memory block. A module corresponding to the content processing sub-task "compression and restoration" reads the audio frame unit on which dejitter is performed from the to-be-used memory block, and the audio frame unit on which dejitter is performed is used as an input of the module corresponding to "compression and restoration" and processed through task processing logic of the module corresponding to "compression and restoration". After execution of the content processing sub-task corresponding to "compression and restoration" is completed, an audio frame unit on which compression and restoration are performed is obtained and outputted. The audio frame unit on which compression and restoration are performed is the final audio frame unit after all the content processing sub-tasks are executed.

In some embodiments, after the operation of "reusing the to-be-used memory block based on the preset execution order to execute a new content processing sub-task in the media application processing task on a processed content frame unit to obtain a final content frame unit on which all content processing sub-tasks in the media application processing task are executed", the media content processing method may further include:
outputting, after media application processing tasks of all content frame units are completed, processed to-be-processed media content, and releasing the to-be-used memory block occupied in a processing process back to the memory pool, the processed to-be-processed media content including final content frame units.

The outputted processed to-be-processed media content may be used as an input of a content encoding module to encode the processed to-be-processed media content, and then the encoded to-be-processed media content is inputted to a multiplexing encapsulation module for container format encapsulation and compression and then transmitted to the terminal.

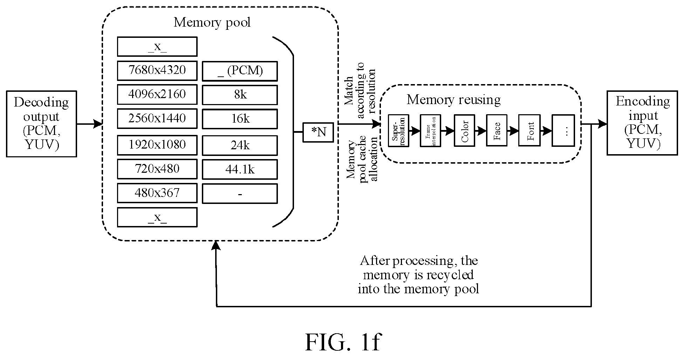

In a specific scene, FIG. 1f is a basic architectural diagram of a memory pool cache of a media content processing method according to this application. A basic processing procedure is as follows.

Inputs of the filter processing procedure of the avfilter apply effects application (application effect processing module) are output audio PCM and video YUV raw stream of the decoder. When allocating memory for a processed audio/video stream, the Filter may separately acquire a memory pool of a corresponding level memory space according to an audio sampling frequency and video resolution. Audio processing and video processing are separate, and memory and processing processes of the two are independent processes. Two memory pools may be applied for audio and video.

A memory pool may be allocated according to the audio sampling frequency (such as 8K, 16K, 24K, 32K, 44.1K...) and the video resolution (such as 8K, 4K, 2K, 1,080P, 720P, 560P, 8 bits, 10 bits, 12 bits, 420/422/444 color sampling information...). If the memory pool does not have a level corresponding to an audio sampling rate and video resolution of an input video source, a to-be-allocated memory pool size may be determined according to specific content attribute information of the memory pool. Specifically, a bit (bit depth) may apply for memory at (8 bits, 10 bits, 12 bits)/8 + 1) byte. A memory pool and dynamic memory application are pre-applied according to the audio sampling rate, video resolution, bit depth, and color sampling information. For example, for an application scene in which the audio sampling rate is 8K, the video adopts a YUV 4: 2: 2 sampling manner, the image pixel bit depth is 10 bits, and the frame refresh rate is 50 FPS, a memory pool size applied for audio/video according to 2 seconds (i.e., the preset duration of content for processing in the foregoing embodiment) is as follows.

The audio memory pool size may be recorded as PCM Buffersize, where PCM Buffersize = audio sampling rate * audio sampling bit depth * duration = 8,000 * 8 bits * 2 = 128,000 bits.

The video memory pool size may be recorded as YUV Buffersize, where YUV Buffersize = image size * color sampling information * image pixel bit depth * duration * frame refresh rate = 7,680 * 4,320 * 1.5 * (10/8 +1) * 8 bits * 2 * 50 = 79,626,240,000 bits,
where 1.5 indicates that in the YUV 4: 2: 2 sampling manner, sampling of the UV components is half of sampling of the Y component, and when the number of bytes occupied by Y is 1, the number of bytes occupied by UV is 0.5.

When there is only one frame of audio/video, or there are a plurality of frames without time sequence association among them, for filter application processing, frame parallelism or gop granularity parallelism may be performed. Frames within the gop granularity may have time sequence association.

For a content frame unit, the avfilter application may apply for a memory block from a memory pool as a buffer according to the decoded audio sampling rate, video resolution, and frame rate. The avfilter application may reuse the buffer applied from the memory pool during serial or parallel processing. An output of a previous filter application is an input of the next filter application processing. After the last filter application processing is completed, a final content frame unit may be transmitted to an audio/video encoding core. Due to different core memory layout architectures, the audio/video encoding core may apply for a memory again and copy output content of the last filter. After the audio/video encoding core completes copying, the buffer applied from the memory pool may be released to the memory pool for reusing. That is, the occupied memory is recycled into the memory pool.

This application may provide a solution to improve media processing performance based on memory pool allocation. Specifically, memory pool buffer processing may be reused to improve repeated memory application and core release invocation during processing of each filter application of the existing framework. The solution provided in this application may improve the engineering performance by 20% + in an application scene with a high audio/video sampling rate and resolution (for example, an 8K and 44.1 7-channel application scene).

It can be learned from the foregoing that in some embodiments, the to-be-processed media content may be acquired, and the to-be-processed media content includes at least one content frame unit. According to the content attribute information of the to-be-processed media content, the memory pool for executing the media application processing task is allocated. The media application processing task includes at least one content processing sub-task arranged in the preset execution order, and the memory pool includes at least one memory block corresponding to the content attribute information. For each of the at least one content frame unit, the to-be-used memory block for processing the content frame unit is determined from the memory pool. The content processing sub-task in the media application processing task is executed on the content frame unit through the to-be-used memory block. When the execution of the content processing sub-task is completed, the to-be-used memory block is reused based on the preset execution order to execute a new content processing sub-task in the media application processing task on the processed content frame unit to obtain the final content frame unit on which all content processing sub-tasks in the media application processing task are executed. According to this application, the content processing sub-tasks may be executed through memory reusing. In this way, frequent memory allocation applications and releases among the content processing sub-tasks may be reduced, thereby improving the media application processing performance.

According to the method described in the foregoing embodiment, the following will be described in further detail using an example in which the media content processing apparatus is specifically integrated into a server.

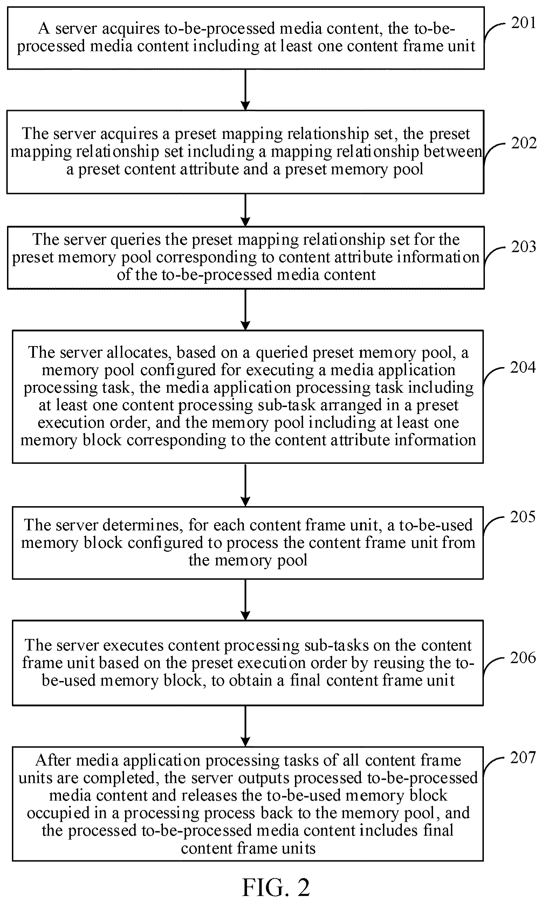

The embodiments of this application provide a media content processing method. As shown in FIG. 2, a specific procedure of the media content processing method may include at least one or arbitrary combinations of some of the following steps.

201: A server acquires to-be-processed media content, the to-be-processed media content including at least one content frame unit.

202: The server acquires a preset mapping relationship set, the preset mapping relationship set including a mapping relationship between a preset content attribute and a preset memory pool.

The preset mapping relationship set may be a relationship table of the preset content attribute and the preset memory pool. A corresponding preset memory pool may be queried from the relationship table based on the content attribute information.

203: The server queries the preset mapping relationship set for the preset memory pool corresponding to the content attribute information of the to-be-processed media content.

The allocation of the memory pool for executing the media application processing task may be applied according to the content attribute information of the to-be-processed media content. The content attribute information herein may be an audio sampling frequency, video resolution, or the like.

204: The server allocates, based on the preset memory pool from the querying, the memory pool for executing the media application processing task, the media application processing task including at least one content processing sub-task arranged in a preset execution order, and the memory pool including at least one memory block corresponding to the content attribute information.

In some embodiments, the media application processing task includes a plurality of sections, each section may be considered as a content processing sub-task, and different content processing sub-tasks may perform different types of content processing on the content frame unit. For example, the content processing sub-task may be super-resolution, frame interpolation, or color enhancement.

Since the application and release of the memory are both inefficient, this application may apply for a relatively large block of memory (i.e., a memory pool, when this block of memory is not sufficient for use, secondary memory allocation may be performed again) at the beginning. Then, a corresponding memory resource may be extracted from this block of memory each time the corresponding memory resource is required in a task execution process. In addition, only after the media application processing task is executed completely, the memory block occupied in a processing process is actually released to an operating system. In this way, the number of memory application and release operations may be reduced, thereby improving the efficiency.

The memory pool may include at least one memory block corresponding to the content attribute information. A size of each memory block may correspond to the content attribute information (such as an audio sampling rate and video resolution) of the to-be-processed media content. Memory blocks in the memory pool have the same size. In this way, the memory size allocated each time is fixed, thereby avoiding the generation of memory fragments.

In some embodiments, the media content processing method may further include:
determining, when the preset memory pool corresponding to the content attribute information is not found in the preset mapping relationship set by the querying, an applied memory size based on the content attribute information of the to-be-processed media content and a preset duration of content for processing; and
allocating, based on the applied memory size, the memory pool for executing the media application processing task on the audio content.

If the to-be-processed media content is the image content, the content attribute information may be an image size, image color sampling information, an image pixel bit depth, and a frame refresh rate of the image frame unit.

If the to-be-processed media content is the audio content, the content attribute information may be an audio sampling frequency and an audio sampling bit depth corresponding to the audio frame unit. The audio sampling bit depth refers to how many bits are adopted to represent an amplitude at a time point. More bits indicate a more accurate amplitude change that may be represented.

205: The server determines, for each content frame unit, a to-be-used memory block for processing the content frame unit from the memory pool.

In some embodiments, before the operation of "determining a to-be-used memory block for processing the content frame unit from the memory pool", the method may further include:
setting a preset idle memory queue; and
storing memory addresses of the memory blocks in the idle state in the memory pool into the preset idle memory queue.

The operation of "determining a to-be-used memory block for processing the content frame unit from the memory pool" may include:
extracting the to-be-used memory address from the preset idle memory queue; and
determining a memory block corresponding to the to-be-used memory address as the to-be-used memory block for processing the content frame unit.

206: The server executes the content processing sub-tasks on the content frame unit based on the preset execution order by reusing the to-be-used memory block, to obtain a final content frame unit.

In some embodiments, the operation of "executing the content processing sub-tasks on the content frame unit based on the preset execution order by reusing the to-be-used memory block, to obtain the final content frame unit" may include:
determining a current content processing sub-task from the media application processing task based on the preset execution order;
executing the current content processing sub-task on the content frame unit through the to-be-used memory block to obtain the processed content frame unit;
determining, when execution of the current content processing sub-task is completed, a new current content processing sub-task from the media application processing task based on the preset execution order, and determining the processed content frame unit as a new content frame unit; and
returning to the operation of executing the current content processing sub-task on the content frame unit by reusing the to-be-used memory block, to obtain the final content frame unit.

The content processing sub-tasks are executed serially and have a particular execution order. Through memory reusing, all content processing sub-tasks may be executed serially one by one to complete the media application processing task.

In some embodiments, after the operation of "executing the content processing sub-tasks on the content frame unit based on the preset execution order by reusing the to-be-used memory block, to obtain the final content frame unit", the media content processing method may further include:
determining an unprocessed content frame unit, the unprocessed content frame unit being a content frame unit on which the media application processing task is not executed; and
executing the content processing sub-tasks on the unprocessed content frame unit by reusing the to-be-used memory block to obtain the final content frame unit corresponding to the unprocessed content frame unit.

207: After media application processing tasks of all content frame units are completed, the server outputs processed to-be-processed media content and releases the to-be-used memory block occupied in a processing process back to the memory pool, the processed to-be-processed media content including final content frame units.

In some embodiments of this application, the outputted processed to-be-processed media content may be used as an input of a content encoding module to encode the processed to-be-processed media content, and then the encoded to-be-processed media content is inputted to a multiplexing encapsulation module for container format encapsulation and compression and then transmitted to the terminal.

This application may provide a memory pool allocation solution. The memory pool is reused during processing of all filter applications after the decoder, thereby reducing the engineering performance consumption brought by frequent memory allocation applications and releases among the filter applications. This can improve the engineering performance by 20% + in video filter processing application scenes such as 4K and 8K with high resolution and high FPS. The solution provided in this application is well applied to video cloud media processing business products as well as 8K projects of customers.

It can be learned from the foregoing that in some embodiments, the to-be-processed media content may be acquired through the server, and the to-be-processed media content includes at least one content frame unit. The preset mapping relationship set is acquired, and the preset mapping relationship set includes a mapping relationship between a preset content attribute and a preset memory pool. The preset mapping relationship set is queried for the preset memory pool corresponding to the content attribute information of the to-be-processed media content. Based on the preset memory pool from the querying, the memory pool for executing the media application processing task is allocated. The media application processing task includes at least one content processing sub-task arranged in the preset execution order, and the memory pool includes at least one memory block corresponding to the content attribute information. For each of the at least one content frame unit, the to-be-used memory block for processing the content frame unit is determined from the memory pool. The content processing sub-tasks are executed on the content frame unit based on the preset execution order by reusing the to-be-used memory block, to obtain the final content frame unit. After media application processing tasks of all content frame units are completed, processed to-be-processed media content is outputted, and the to-be-used memory block occupied in the processing process is released back to the memory pool. The processed to-be-processed media content includes final content frame units.

According to this application, the content processing sub-tasks may be executed through memory reusing, and only after all media application processing tasks are finally completed, the applied memory block is released back to the memory pool. In this way, frequent memory allocation applications and releases among the content processing sub-tasks may be reduced, thereby improving the media application processing performance.

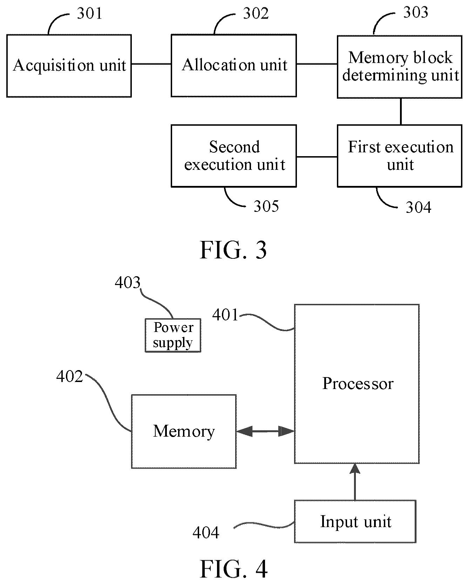

To better implement the foregoing method, the embodiments of this application further provide a media content processing apparatus. As shown in FIG. 3, the media content processing apparatus may include an acquisition unit 301, an allocation unit 302, a memory block determining unit 303, a first execution unit 304, and a second execution unit 305, as follows.

### (1) Acquisition unit 301;

The acquisition unit is configured to acquire to-be-processed media content, the to-be-processed media content including at least one content frame unit.

### (2) Allocation unit 302;

The allocation unit is configured to allocate, according to content attribute information of the to-be-processed media content, a memory pool for executing a media application processing task, the media application processing task including at least one content processing sub-task arranged in a preset execution order, and the memory pool including at least one memory block corresponding to the content attribute information.

In a possible implementation, in some embodiments of this application, the allocation unit may include an acquisition subunit, a querying subunit, and an allocation subunit, as follows.

The acquisition subunit is configured to acquire a preset mapping relationship set, the preset mapping relationship set including a mapping relationship between a preset content attribute and a preset memory pool.

The querying subunit is configured to query the preset mapping relationship set for the preset memory pool corresponding to the content attribute information of the to-be-processed media content.

The allocation subunit is configured to allocate, based on the preset memory pool from the querying, the memory pool for executing the media application processing task.

In some embodiments of this application, the allocation unit may further include an application size determining subunit and a memory pool allocation subunit, as follows.

The application size determining subunit is configured to determine, when the preset memory pool corresponding to the content attribute information is not found in the preset mapping relationship set by the querying, an applied memory size based on the content attribute information and a preset duration of content for processing.

The memory pool allocation subunit is configured to allocate, based on the applied memory size, the memory pool for executing the media application processing task.

In some embodiments of this application, the to-be-processed media content includes image content, and the content frame unit is an image frame unit of the image content. The allocation unit may include a first calculation subunit, a first determining subunit, and a first allocation subunit, as follows.

The first calculation subunit is configured to calculate a memory capacity occupied by the image frame unit according to an image size, image color sampling information, and an image pixel bit depth of the image frame unit.

The first determining subunit is configured to determine an applied memory size according to the memory capacity and a frame refresh rate corresponding to the image frame unit.

The first allocation subunit is configured to allocate, based on the applied memory size, the memory pool for executing the media application processing task on the image content.

In some embodiments of this application, the to-be-processed media content includes audio content, and the content frame unit is an audio frame unit of the audio content.

The allocation unit may include a second calculation subunit, a second determining subunit, and a second allocation subunit, as follows.

The second calculation subunit is configured to calculate a memory capacity occupied by the audio frame unit according to an audio sampling frequency and an audio sampling bit depth corresponding to the audio frame unit.

The second determining subunit is configured to determine an applied memory size according to the memory capacity and a preset duration of content for processing.

The second allocation subunit is configured to allocate, based on the applied memory size, the memory pool for executing the media application processing task on the audio content.

### (3) Memory block determining unit 303;

The memory block determining unit is configured to determine, for each of the at least one content frame unit, a to-be-used memory block for processing the content frame unit from the memory pool.

### (4) First execution unit 304;

The first execution unit is configured to execute the content processing sub-task in the media application processing task on the content frame unit through the to-be-used memory block.

### (5) Second execution unit 305;

The second execution unit is configured to reuse, when execution of the content processing sub-task is completed, the to-be-used memory block based on the preset execution order to execute a new content processing sub-task in the media application processing task on a processed content frame unit to obtain a final content frame unit on which all content processing sub-tasks in the media application processing task are executed.

In some embodiments of this application, the first execution unit may include a task determining subunit and an execution subunit, and the second execution unit may include a re-determining subunit and a returning subunit, as follows.

The task determining subunit is configured to determine a current content processing sub-task from the media application processing task based on the preset execution order.

The execution subunit is configured to execute the current content processing sub-task on the content frame unit through the to-be-used memory block to obtain the processed content frame unit.

The re-determining subunit is configured to determine, when execution of the current content processing sub-task is completed, a new current content processing sub-task from the media application processing task based on the preset execution order, and determine the processed content frame unit as a new content frame unit.

The returning subunit is configured to return to the operation of executing a current content processing sub-task on the content frame unit by reusing the to-be-used memory block, to obtain the final content frame unit on which all content processing sub-tasks in the media application processing task are executed.

In some embodiments of this application, the media content processing apparatus may further include a reusing unit, as follows.

The reusing unit is configured to determine an unprocessed content frame unit, the unprocessed content frame unit being a content frame unit on which the media application processing task is not executed; and execute the content processing sub-tasks on the unprocessed content frame unit by reusing the to-be-used memory block to obtain the final content frame unit corresponding to the unprocessed content frame unit.

In some embodiments of this application, the reusing unit may include an adding subunit, an extraction subunit, and a task execution subunit, as follows.

The adding subunit is configured to add a to-be-used memory address corresponding to the to-be-used memory block to a preset idle memory queue, the preset idle memory queue being used for storing memory addresses of memory blocks in an idle state.

Th extraction subunit is configured to extract the to-be-used memory address from the preset idle memory queue.

The task execution subunit is configured to execute the content processing sub-tasks on the unprocessed content frame unit through the to-be-used memory block corresponding to the to-be-used memory address to obtain the final content frame unit corresponding to the unprocessed content frame unit.

In some embodiments of this application, the media content processing apparatus may further include an output unit, as follows.

The output unit is configured to output, after media application processing tasks of all content frame units are completed, processed to-be-processed media content, and release the to-be-used memory block occupied in a processing process back to the memory pool, the processed to-be-processed media content including final content frame units.

It can be learned from the foregoing that in some embodiments, the to-be-processed media content may be acquired through the acquisition unit 301, and the to-be-processed media content includes at least one content frame unit. The allocation unit 302 allocates, according to the content attribute information of the to-be-processed media content, the memory pool for executing the media application processing task. The media application processing task includes at least one content processing sub-task arranged in the preset execution order, and the memory pool includes at least one memory block corresponding to the content attribute information The memory block determining unit 303 determines, for each content frame unit, the to-be-used memory block for processing the content frame unit from the memory pool. The first execution unit 304 executes the content processing sub-task in the media application processing task on the content frame unit through the to-be-used memory block. The second execution unit 305 reuses, when execution of the content processing sub-task is completed, the to-be-used memory block based on the preset execution order to execute a new content processing sub-task in the media application processing task on a processed content frame unit to obtain a final content frame unit on which all content processing sub-tasks in the media application processing task are executed. According to this application, the content processing sub-tasks may be executed through memory reusing. In this way, frequent memory allocation applications and releases among the content processing sub-tasks may be reduced, thereby improving the media application processing performance.

The embodiments of this application further provide an electronic device. As shown in FIG. 4, it is a schematic structural diagram of an electronic device according to an embodiment of this application. The electronic device may be a terminal, a server, or the like. Specifically,

The electronic device may include components such as a processor 401 of one or more processing cores, a memory 402 of one or more computer-readable storage media, a power supply 403, and an input unit 404. A person skilled in the art may understand that the structure of the electronic device shown in FIG. 4 does not constitute a limitation to the electronic device, and the electronic device may include more or fewer components than those illustrated, or a combination of some components, or have a different arrangement of components.

The processor 401 is a control center of the electronic device, connects various parts of the entire electronic device using various interfaces and lines, and performs various functions of the electronic device and processes data by running or executing software programs and/or modules stored in the memory 402 and invoking data stored in the memory 402. In some embodiments, the processor 401 may include one or more processing cores. Preferably, the processor 401 may integrate an application processor and a modem processor. The application processor mainly processes an operating system, a user interface, an application program, and the like. The modem processor mainly processes wireless communication. The above-mentioned modem processor may not be integrated into the processor 401.

The memory 402 may be configured to store software programs and modules, and the processor 401 executes various functional applications and data processing by running the software programs and the modules stored in the memory 402. The memory 402 may mainly include a program storage area and a data storage area. The program storage area may store an operating system, an application program required by at least one function (such as a sound playing function and an image playing function), etc. The data storage area may store data or the like created according to the use of the electronic device. In addition, the memory 402 may include a high-speed random access memory (RAM) and a non-volatile memory, such as at least one magnetic disk storage device, a flash memory device, or other volatile solid-state storage devices. Correspondingly, the memory 402 may further include a memory controller to provide access to the memory 402 by the processor 401.

The electronic device further includes a power supply 403 for supplying power to the various components. Preferably, the power supply 403 may be logically connected to the processor 401 through a power supply management system so that functions such as managing charging, discharging, and power consumption are realized through the power supply management system. The power supply 403 may further include one or more of a direct current or alternating current power supply, a re-charging system, a power failure detection circuit, a power supply converter or inverter, a power supply state indicator, and any other assemblies.

The electronic device may further include the input unit 404. The input unit 404 may be configured to receive inputted numeric or character information and generate keyboard, mouse, joystick, and optical or trackball signal inputs related to user settings and function controls.

Although not shown in the figure, the electronic device may further include a display unit, and the like. Details are not described herein again. Specifically, in some embodiments, the processor 401 in the electronic device may load, according to the following instructions, executable files corresponding to processes of one or more application programs into the memory 402. The processor 401 runs the application programs stored in the memory 402, to implement various functions provided in the foregoing embodiments.

Specific implementations of the above operations may refer to the foregoing embodiments. Details are not described herein again.

A person skilled in the art may understand that all or some operations of the methods in the foregoing embodiments may be completed through instructions or through hardware related to instruction controlling. The instructions may be stored in a computer-readable storage medium and loaded and executed by a processor.

Therefore, the embodiments of this application provide a computer-readable storage medium, having a plurality of instructions stored therein. The instructions can be loaded by a processor to perform the operations of any media content processing method provided in the embodiments of this application.

Specific implementations of the above operations may refer to the foregoing embodiments. Details are not described herein again.

The computer-readable storage medium may include: a read only memory (ROM), a RAM, a magnetic disk, an optical disc, or the like.

Since the instructions stored in the computer-readable storage medium may perform the operations of any media content processing method provided in the embodiments of this application, the beneficial effects that can be achieved by any media content processing method provided in the embodiments of this application may be achieved. The foregoing embodiments may be referred to for details. Details are not further described herein.

According to an aspect of this application, a computer program product is provided, including a computer program. The computer program is stored in the computer-readable storage medium. A processor of a computer device reads the computer program from the computer-readable storage medium, and the processor executes the computer program to cause the computer device to perform the method provided in various implementations of the foregoing media content processing aspects.

The media content processing method and the related device provided in the embodiments of this application are described above in detail. Specific examples are applied herein to illustrate the principles and implementations of this application, and the above illustrations of the embodiments are only used for helping understand the method of this application and its core ideas. Meanwhile, for a person skilled in the art, according to the ideas of this application, there will be changes in the specific implementations and the scope of application. In summary, the contents of this specification shall not be construed as limiting this application.

## Claims

1. A media content processing method, executable by an electronic device, and comprising:
allocating, according to content attribute information of input media content, a memory pool for executing a media application processing task, the input media content comprising at least one content frame unit, the media application processing task comprising at least one content processing sub-task arranged in a preset execution order, and the memory pool comprising at least one memory block corresponding to the content attribute information;
determining, for each of the at least one content frame unit, a first memory block for processing the content frame unit from the memory pool;
executing the content processing sub-task in the media application processing task on the content frame unit through the first memory block, to obtain a processed content frame unit; and
reusing, when execution of the content processing sub-task is completed, the first memory block based on the preset execution order to execute a new content processing sub-task in the media application processing task on the processed content frame unit, to obtain a final content frame unit on which all content processing sub-tasks in the media application processing task are executed.

2. The method according to claim 1, wherein the executing the content processing sub-task in the media application processing task on the content frame unit through the first memory block comprises:
determining a current content processing sub-task from the media application processing task based on the preset execution order; and
executing the current content processing sub-task on the content frame unit through the first memory block to obtain the processed content frame unit; and
the reusing, when execution of the content processing sub-task is completed, the first memory block based on the preset execution order to execute a new content processing sub-task in the media application processing task on a processed content frame unit to obtain a final content frame unit on which all content processing sub-tasks in the media application processing task are executed comprises:
determining, when execution of the current content processing sub-task is completed, a new current content processing sub-task from the media application processing task based on the preset execution order, and determining the processed content frame unit as a new content frame unit; and
returning to the operation of executing a current content processing sub-task on the content frame unit by reusing the first memory block, to obtain the final content frame unit on which all content processing sub-tasks in the media application processing task are executed.

3. The method according to claim 1 or 2, wherein after the reusing the first memory block based on the preset execution order to execute a new content processing sub-task in the media application processing task on a processed content frame unit, to obtain a final content frame unit on which all content processing sub-tasks in the media application processing task are executed, the method further comprises:
determining an unprocessed content frame unit on which the media application processing task is not executed; and
executing the content processing sub-tasks on the unprocessed content frame unit by reusing the first memory block, to obtain a final content frame unit corresponding to the unprocessed content frame unit.

4. The method according to claim 3, wherein the executing the content processing sub-tasks on the unprocessed content frame unit by reusing the first memory block, to obtain a final content frame unit corresponding to the unprocessed content frame unit, comprises:
adding a memory address corresponding to the first memory block to a preset idle memory queue, the preset idle memory queue being used for storing memory addresses of memory blocks in an idle state;
extracting the memory address from the preset idle memory queue; and
executing the content processing sub-tasks on the unprocessed content frame unit through the first memory block corresponding to the memory address, to obtain the final content frame unit corresponding to the unprocessed content frame unit.

5. The method according to any one of claims 1 to 4, wherein the allocating, according to content attribute information of the input media content, a memory pool for executing a media application processing task comprises:
acquiring a preset mapping relationship set, the preset mapping relationship set comprising a mapping relationship between a preset content attribute and a preset memory pool;
querying the preset mapping relationship set for a preset memory pool corresponding to the content attribute information of the input media content; and
allocating, based on the preset memory pool from the querying, the memory pool for executing the media application processing task.

6. The method according to claim 5, further comprising:
determining, in response to that the preset memory pool corresponding to the content attribute information is not found in the preset mapping relationship set by the querying, an applied memory size based on the content attribute information and a preset duration of content for processing ; andallocating, based on the applied memory size, the memory pool for executing the media application processing task.

7. The method according to any one of claims 1 to 4, wherein the input media content comprises image content, and the content frame unit is an image frame unit of the image content; and
the allocating, according to content attribute information of the input media content, a memory pool for executing a media application processing task comprises:
calculating a memory capacity occupied by the image frame unit according to an image size, image color sampling information, and an image pixel bit depth of the image frame unit;
determining an applied memory size according to the memory capacity and a frame refresh rate corresponding to the image frame unit; and
allocating, based on the applied memory size, the memory pool for executing the media application processing task on the image content.

8. The method according to any one of claims 1 to 4, wherein the input media content comprises audio content, and the content frame unit is an audio frame unit of the audio content; and
the allocating, according to content attribute information of the input media content, a memory pool for executing a media application processing task comprises:
calculating a memory capacity occupied by the audio frame unit according to an audio sampling frequency and an audio sampling bit depth corresponding to the audio frame unit;
determining an applied memory size according to the memory capacity and a preset duration of content for processing ; and
allocating, based on the applied memory size, the memory pool for executing the media application processing task on the audio content.

9. The method according to any one of claims 1 to 8, wherein after the reusing the first memory block based on the preset execution order to execute a new content processing sub-task in the media application processing task on a processed content frame unit, to obtain a final content frame unit on which all content processing sub-tasks in the media application processing task are executed, the method further comprises:
outputting, after media application processing tasks of all content frame units are completed, processed input media content, and releasing the first memory block occupied in a processing process back to the memory pool, the processed input media content comprising final content frame units.

10. A media content processing apparatus, deployed on an electronic device, and comprising:
an allocation unit configured to allocate, according to content attribute information of the input media content, a memory pool for executing a media application processing task, the input media content comprising at least one content frame unit, the media application processing task comprising at least one content processing sub-task arranged in a preset execution order, and the memory pool comprising at least one memory block corresponding to the content attribute information;
a memory block determining unit configured to determine, for each of the at least one content frame unit, a first memory block for processing the content frame unit from the memory pool;
a first execution unit configured to execute the content processing sub-task in the media application processing task on the content frame unit through the first memory block, to obtain a processed content frame unit; and
a second execution unit configured to reuse, when execution of the content processing sub-task is completed, the first memory block based on the preset execution order to execute a new content processing sub-task in the media application processing task on the processed content frame unit to obtain a final content frame unit on which all content processing sub-tasks in the media application processing task are executed.

11. An electronic device, comprising a memory and a processor, the memory storing a plurality of instructions, and the processor being configured to run the plurality of instructions in the memory to perform operations of the media content processing method according to any one of claims 1 to 9.

12. A computer-readable storage medium, storing a plurality of instructions, the instructions being adapted to be loaded by a processor to perform operations of the media content processing method according to any one of claims 1 to 9.

13. A computer program product, comprising a computer program which, when executed by a processor, implements operations of the media content processing method according to any one of claims 1 to 9.
